Europäisches Patentamt

European Patent Office

Office européen des brevets

(11) Publication number: **0 294 747 B1**

# EUROPEAN PATENT SPECIFICATION

(45) Date of publication of patent specification: **16.02.94** (51) Int. Cl.5: **G01J 5/60**

(21) Application number: **88109008.8**

(22) Date of filing: **06.06.88**

The file contains technical information submitted
after the application was filed and not included in
this specification

(54) **Pyrometer.**

(30) Priority: **06.06.87 JP 141738/87**
     **06.06.87 JP 141739/87**

(43) Date of publication of application:
     **14.12.88 Bulletin 88/50**

(45) Publication of the grant of the patent:
     **16.02.94 Bulletin 94/07**

(84) Designated Contracting States:
     **DE FR GB**

(56) References cited:
     **EP-A- 0 143 282**
     **EP-A- 0 317 653**
     **GB-A- 2 113 384**

     **JOURN. OF PHYSICS E, SCIENT. INSTR., vol.
     13, no. 3, March 1980, Bristol, GB, pages
     306-310; J.L. GARDNER et al.: "Multi-
     wavelength radiation pyrometry where re-
     flectance is measured to estimate emissiv-
     ity"**

     **PATENT ABSTRACTS OF JAPAN, vol. 9, no.
     327 (P-415)[2050], 21st December 1985, & JP-
     A-60 152 924**

(73) Proprietor: **Minolta Camera Kabushiki Kaisha
     Osaka Kokusai Building
     30, Azuchi-machi 2-chome
     Higashi-ku Osaka-shi Osaka-fu(JP)**

(72) Inventor: **Makino, Toshiro 36-304, Higashioji-
     Takano-Dai3
     Jutaku, 1-23
     Higashibiraki-cho
     Takano
     Sakyo-ku
     Kyoto-shi Kyoto-fu(JP)**
     Inventor: **Tsujimura, Hiroji c/o Minolta Camera
     K.K.
     Osaka Kokusai Bldg
     2-30, Azuchi-Machi
     Higashi-ku Osaka-shi Osaka, 541(JP)**
     Inventor: **Arima, Jiro c/o Minolta Camera K.K.
     Osaka Kokusai Bldg
     2-30, Azuchi-Machi
     Higashi-ku Osaka-shi Osaka, 541(JP)**

**PATENT ABSTRACTS OF JAPAN, vol. 11, no. 189 (P-587)[2636], 18th June 1987; & JP-A-62 15 424**

Ⓟ Representative: **Ritter und Edler von Fischern, Bernhard,Dipl.-Ing. et al**
**Hoffmann, Eitle & Partner,**
**Patentanwälte,**
**Postfach 81 04 20**
**D-81904 München (DE)**

## Description

The present invention relates to a pyrometer as described in the preamble part (features (a) to (f)) of claim 1.

A pyrometer of the type mentioned hereinabove is known from JOURNAL OF PHYSICS E: SCIENTIFIC INSTRUMENTS, Vol. 13, No. 3, March 1980, pages 306 to 310.

In general, in a pyrometer it is necessary to know the emissivity of a target to be measured, but in many cases such emssitivity cannot be known. Therefore, in a plurality of proposed pyrometers, the emissivities of a target to be measured are assumed as follows : In Japanese Laid-Open Patent Application No. 130622/1981, light having two different colors (two different wavelengths $\lambda_1$, $\lambda_2$) is measured, and the emissivity $\epsilon$ in the wavelength $\lambda_1$ is assumed to be equal to the emissivity $\epsilon$ in the wavelength $\lambda_2$. In the other Japanese Laid-Open Patent Application No. 130623/1981, light having three different colors (three different wavelengths) is measured, and the emissivities $\epsilon(\lambda)$ in respective wavelengths are assumed that $\epsilon(\lambda) = \exp.(a_0 + a_1 \lambda)$, wherein $a_0$ and $a_1$ represent constants respectively. Furthermore, in the U.S. Patent No. 4,411,519, three temperatures $T_{12}$, $T_{23}$, and $T_{31}$ are calculated with assuming $\epsilon(\lambda_1) = \epsilon(\lambda_2)$, $\epsilon(\lambda_2) = \epsilon(\lambda_3)$, $\epsilon(\lambda_3) = \epsilon(\lambda_1)$ respectively, and a true temperature T is obtained by $T = (T_{12} + T_{23} + T_{31})/3$.

Meanwhile, in the other Japanese Laid-Open Patent Application No. 30727/1986, the intensities $L(\lambda_1)$ and $L(\lambda_2)$ of light reflected by the target are measured in two different wavelengths $\lambda_1$, $\lambda_2$ respectively, and the temperature is calculated on the basis of the measured light intensities $L(\lambda_1)$, $L(\lambda_2)$, and a reflected light intensity ratio $L(\lambda_1)/L(\lambda_2)$ represented by the emissivities $\epsilon(\lambda_1)$, $\epsilon(\lambda_2)$ as follows:

$$L(\lambda_1)/L(\lambda_2) = \{1 - \epsilon(\lambda_1 1)\}/\{(1 - \epsilon(\lambda_2)\} \qquad (A)$$

Namely, assuming that the measured radiation intensity in wavelength $\lambda$ is $D(\lambda)$ and the radiation intensity of blackbody in the wavelength $\lambda$ at temperature T is $D_0(\lambda,T)$, the following equation is established:

$$\epsilon(\lambda) = D(\lambda)/D_0(\lambda,T) \qquad (B)$$

Here, the temperature T can be calculated in accordance with the equation (A) , since the unknown factor is only T in the equation (A) if $\epsilon(\lambda)$ shown in the equation (B) is substituted to the equation (A). $D_0(\lambda,T)$ can be calculated in accordance with the well-known Planck formula and constants peculiar to the device.

However, in Japanese Pantent Laid-Open Nos. 130622/1981 and 7529/1982, since it is assumed that $\epsilon(\lambda_1) = \epsilon(\lambda_2)$, the true temperature can be calculated only when a spectral characteristic of emissivity is constant. In other words, when the spectral characteristic of emissivity is not constant, assumption $\epsilon(\lambda_1) = \epsilon(\lambda_2)$ itself is erroneous, so that the true temperature can not be calculated. In either case, in Japanese Patent Laid-Open No. 130622/1981,U.S.Patent No.4,411,519 and including No. 130623/1981, since information on the reflected light is not included in the assumption of an emissivity, the true temperature can not be obtained except in the case of constant spectral charateristic of emissivity.

On the other hand, in the calculation in Japanese Patent Laid-Open No. 30727/1986, there may be the case that two different temperatures are obtained. This is because the equation $R(\lambda_1)/R(\lambda_2) = \{1 - \epsilon(\lambda_1)\}/\{1 - \epsilon(\lambda_2)\}$, where R is a reflectance used in the calculation, is only established when all reflected light from the target to be measured is collected or it has a perfect diffusion surface.

## SUMMARY OF THE INVENTION

It is an object of the present invention to provide a pyrometer of the type as specified at the beginning hereinabove, which pyrometer can calculate the true temperature of a target even when the influence of the background radiation is rather high.

According to the present invention, this object is solved by providing in said pyrometer the features of the characterizing part of claim 1.

Further improvements according to the present invention can be derived from the sub-claims.

A pyrometer according to the present invention may comprise light emitting means for emitting light having at least two wavelengths to a target to be measured, first light measuring means for measuring light emitted by said light emitting means with respect to said at least two wavelengths to produce first signals, second light measuring means for measuring light reflected by the target with respect to said at least two wavelengths to produce second signals, third light measuring means for measuring intensity of light radiated by the target with respect to said at least two wavelengths to produce third signals, emissivity assuming means for assuming an emissivity of the target on the basis of the following equation,

$$\epsilon(\lambda) = 1 - k \times L(\lambda)$$

wherein,

$\epsilon(\lambda)$ represents an assumed emissivity of the target with respect to a wavelength $\lambda$,

k represents a constant, and

L $(\lambda)$ represents information as to the second signal at a wavelength $\lambda$,

and temperature calculating means for calculating a temperature of the target, on the basis of the minimum value of the difference between an assumed radiation intensity calculated according to the assumed emissivity of the target and a measured radiation intensity according to the third signals.

Thus, in the present invention, since measured reflection information is included in the assumed emissivity, the true temperature can be calculated even when the actual emissivity spectrum is complicated. In addition, since a temperature where the difference between the assumed radiation intensity and measured radiation intensity is minimized is obtained, measuring errors of the radiation intensity and reflection intensity etc. can be prevented.

Likewise, when the background radiation affecting the measured radiation intensity of the target is present, the pyrometer may be constructed to comprise means for supplying a background radiation intensity of light coming from the background of the target, and wherein the temperature calculating means includes means for calculating the temperature of the target, on the basis of the minimum difference between the measured radiation intensity and the sum of the background radiation intensity and the assumed radiation intensity, to remove such influence of the background radiation.

Moreover, a pyrometer according to the present invention may comprise light emitting means for emitting light having at least three wavelengths to a target to be measured, first light measuring means for measuring light emitted by said light emitting means with respect to said at least three wavelengths to produce first signals, second light measuring means for measuring light reflected by the target with respect to said at least three wavelengths to produce second signals, third light measuring means for measuring light radiated by the target with respect to said at least three wave lengths to produce third signals, emissivity assuming means for assuming an emissivity of the target on the basis of the following equation,

$$\epsilon \, (\lambda) \, = \, 1 \, - \, k \, (\lambda) \, \times \, L \, (\lambda)$$

wherein,

$\epsilon \, (\lambda)$ represents an assumed emissivity of the target with respect to a wavelength $\lambda$,

k $(\lambda)$ represents a function of wavelength $\lambda$,

L $(\lambda)$ represents information as to the second signal with respect to a wavelength $\lambda$,

and temperature calculating means for calculating a temperature of the target on the basis of the assumed emissivity and the first to third signals at each wavelength.

According to this configuration, since the emissivity $\epsilon$ is assumed as $\epsilon \, = \, 1 \, - \, k \, (\lambda) \, \times \, L \, (\lambda)$ and k is a function of a wavelength $\lambda$, an accurate temperature can be calculated even when k varies on the wavelength.

BRIEF DESCRIPTION OF THE DRAWINGS

These and other objects and features of the present invention will become apparent from the following description taken in conjunction with preferred embodiments thereof with reference to the accompanying drawings, throughout which like parts are designated by like reference numerals, and in which:

Fig. 1 is a schematic construction diagram of a pyrometer of one embodiment of the present invention.

Fig. 2 is a specific construction diagram of the embodiment in which the construction of Fig. 1 is partly modified.

Fig. 3 is an explanatory view with respect to a reflectance.

Fig. 4 represents mathematical formulas showing a principle of the present embodiment mathematically.

Fig. 5 is a graph showing the same principle.

Fig. 6 is a flow chart of one embodiment of a calculating operation.

Fig. 7 is a flow chart showing an example of different calculating operation.

Fig. 8 is a view showing an example of indication in an indicating part.

Fig. 9 represents mathematical formulas showing a principle of another embodiment.

Fig. 10 and Fig. 11 are flow charts of the calculating operations relative to Fig. 9.

DETAILED DESCRIPTION OF THE PREFERRED EMBODIMENT

One embodiment of the present invention will now be described in conjunction with the drawings.

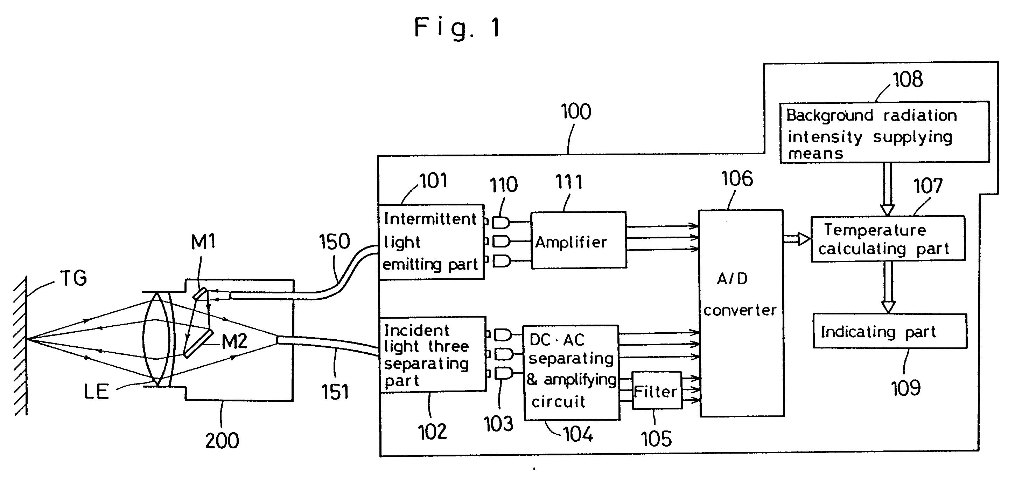

Fig. 1 is a construction diagram of a pyrometer of one embodiment of the present invention. In the present embodiment, light having three different wavelengths $\lambda_1$, $\lambda_2$, $\lambda_3$ will be measured. An intermittent light emitting part 101 constituting a body 100 of the pyrometer comprises a light source which produces reference light including the light having three different wavelengths $\lambda_1$, $\lambda_2$, $\lambda_3$ and a mechanism which intermits the reference light from the light source, and emits intermittent light to an optical fiber 150. The intermittent reference light is directed to a measuring head part 200 through the optical fiber 150 and reflected by mirrors $M_1$, $M_2$. The reflected light is focused through the central portion of a lens LE and projected toward a target TG.

The measuring head part 200 receives light radiated by the target TG itself and the reference light reflected by the target TG simultaneously through an identical angle of view, and transmits them to the body 100 through the peripheral portion of the lens LE and an optical fiber 151. The measured light is separated into three different wavelengths in an incident light separating part 102 of the body 100, and respective intensities of light in respective wavelengths are converted into corresponding electric signals by respective sensors 103. These electric signals are divided into DC components corresponding to the radiated light intensity and AC components corresponding to the reflected light intensity at each wavelength and are amplified by a DC • AC separating & amplifying circuit 104. The amplified signals are converted from an analog form into corresponding digital form by an A/D converter 106 and the converted digital signals are transmitted to a temperature calculating part 107.

At the same time, the reference light intensity is also converted into electric signals at each wavelength by sensors 110, amplified by an amplifier 111 and inputted to the temperature calculating part 107 after converted into digital signals by the A/D converter. Meanwhile, the background radiation intensity is also inputted to the temperature calculating part 107 from a background radiation intensity supplying means 108. In the temperature calculating part, a plurality of values, obtained when a blackbody having temperature T is measured, are prepared at each wavelength, and the temperature of the target is calculated with using the values. The calculated temperature and emissivity of each wavelength are sent to an indicating part 109 to be indicated.

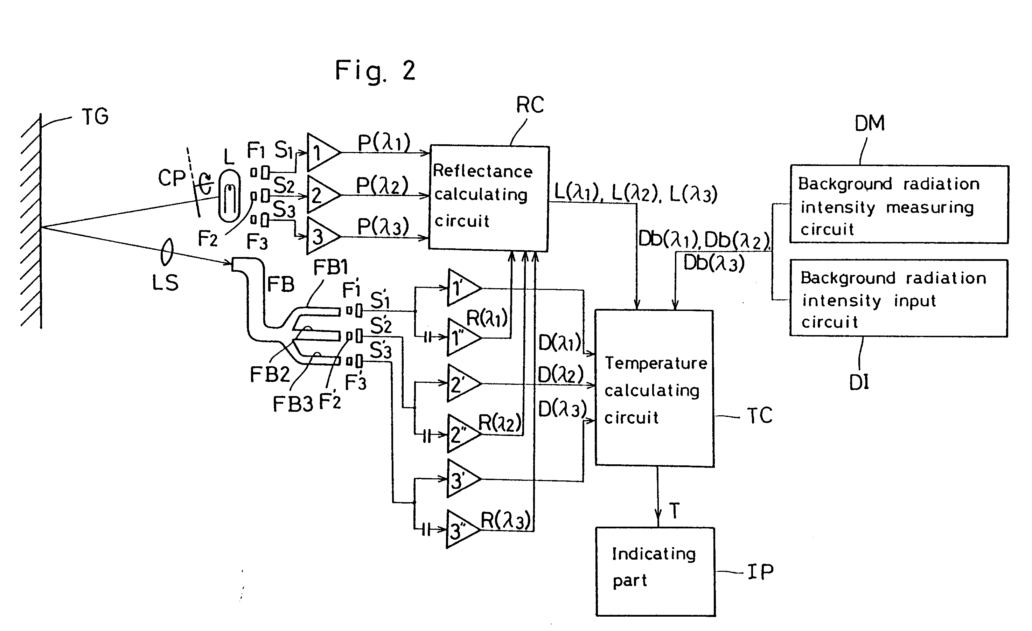

Next, a specific configuration of the pyrometer modified slightly from the configuration of Fig. 1 will be explained with reference to Fig. 2. In Fig. 2, a light emitting means comprises a light source L which produces the reference light including three different wavelengths $\lambda_1$, $\lambda_2$, $\lambda_3$ and a chopper CP which intermits the reference light from the light source L, and irradiates the intermittent light to the target TG. The chopper CP is realized by rotating a rotor having light transmitting and interrupting portions. LS indicates a lens which condenses light from the target TG and the condensed light is divided into three different optical paths by a fiber FB. The light transmitted through the fiber FB1, FB2 and FB3 are received respectively by optical detectors $S'_1$, $S'_2$, and $S'_3$ through optical filters $F'_1$, $F'_2$ and $F'_3$ which transmit the light having wavelengths of $\lambda_1$, $\lambda_2$, and $\lambda_3$. In the optical detectors $S'_1$, $S'_2$, and $S'_3$, both the radiation intensity B-

($\lambda$, T) of the light radiated from the target TG itself and an intensity signal of the reflected light of the light source L reflected by the target TG are detected in superposition. The radiation intensity B($\lambda$, T) of the light radiated by the target TG itself among output signals of the optical detectors $S'_1$, $S'_2$, and $S'_3$ is constant, so that it is detected as the DC signals, amplified by the DC amplifiers 1', 2' and 3' and outputted as the radiation intensity measured values D($\lambda_1$), D($\lambda_2$), D($\lambda_3$) with respect to wavelengths $\lambda_1$, $\lambda_2$, $\lambda_3$. The radiation intensity measuring means aforementioned with respect to three-wavelength light is constituted by the DC amplifiers 1', 2' 3', optical filters $F'_1$, $F'_2$, $F'_3$ and optical detectors $S'_1$, $S'_2$, $S'_3$.

Among output signals of the optical detectors $S'_1$, $S'_2$, $S'_3$, the intensity signal of light reflected by the target TG is, since light radiated to the target TG from the light source is modulated to intermittent light by the chopper CP, detected as the AC signals through a DC cut capacitor and the detected signals are amplified respectively by the AC amplifiers 1", 2", 3", and outputted as intensity signals R($\lambda_1$), R($\lambda_2$), R($\lambda_3$) of the reflected light with respect to the wavelengths $\lambda_1$, $\lambda_2$, $\lambda_3$. The aforesaid reflected light measuring means is constituted by the AC amplifiers 1", 2", 3", optical filters $F'_1$, $F'_2$, $F'_3$ and optical detectors $S'_1$, $S'_2$, $S'_3$.

Now, since the intensity of reference light with respect to wavelengths $\lambda_1$, $\lambda_2$, $\lambda_3$ is necessary for calculating the reflectance, there are provided optical detectors $S_1$, $S_2$, $S_3$. The optical detectors $S_1$, $S_2$, $S_3$ are faced to the light source L through the optical filters $F_1$, $F_2$, $F_3$ which transmit only the light corresponding to the wavelengths $\lambda_1$, $\lambda_2$, $\lambda_3$ respectively. Though the light source L emits light to various wavelengths, optical detector $S_1$, detects therefrom the light intensity of wavelength component of $\lambda_1$, which is necessary for calculating the reflectance. Similarly, the optical detectors $S_2$, $S_3$ detect the light intensity of wavelength components of $\lambda_2$, $\lambda_3$. Detected outputs of the optical detectors $S_1$, $S_2$, $S_3$ are amplified respectively by the DC amplifiers 1, 2, 3 for correcting the light source to obtain intensity signals P($\lambda_1$), P($\lambda_2$), P($\lambda_3$) of the reference light with respect to the wavelengths $\lambda_1$, $\lambda_2$ and $\lambda_3$. Output signals R($\lambda_1$), R($\lambda_2$), R($\lambda_3$) of the AC amplifiers 1", 2", 3" and output signals P($\lambda_1$), P($\lambda_2$), P($\lambda_3$) of the DC amplifiers 1, 2, 3 are inputted to a reflectance calculating circuit RC, and the measured reflectance L($\lambda_1$) = R($\lambda_1$)/P($\lambda_1$) of the target TG at wavelength $\lambda_1$, and the measured reflectances L($\lambda_2$) = R($\lambda_2$)/P($\lambda_2$), L($\lambda_3$) = R($\lambda_3$)/P($\lambda_3$) of the target TG at wavelengths $\lambda_2$, $\lambda_3$ are calculated. Calculated outputs L($\lambda_1$), L($\lambda_2$), L($\lambda_3$) of the reflectance calculating circuit RC are inputted to the temperature calculating circuit TC together with radiation intensity measured values (D($\lambda_1$), D-

$(\lambda_2)$, $D(\lambda_3)$ obtained from the DC amplifiers 1′, 2′, 3′, and the true temperature is calculated. A method of calculating the true temperature from these data will be explained hereinbelow.

When a target to be measured is a blackbody, a light energy of wavelength $\lambda$ or a radiation intensity $E(\lambda, T)$ radiated per unit area from the target can be given by the Planck formula. Now, if a measured value $Do(\lambda, T)$ is obtained by measuring the radiation intensity of the target at the wavelength $\lambda$,

$$Do(\lambda, T) = \alpha \times E(\lambda, T) \qquad (1)$$

is established. Here, $\alpha$ is a constant determined by a measuring device, and specifically decided by a calibration measurement. Thus, the temperature T is obtained by calculating the equation (1). Though the target to be measured was deemed as a blackbody, in practice, the target is not the blackbody, so that its emissivity must be detected to correct the temperature which is obtained as the blackbody. When the emissivity of the non-blackbody is $\epsilon(\lambda, T)$, radiation intensity $B(\lambda, T)$ of light having the wavelength $\lambda$ at the temperature T thereof is, $B(\lambda, T) = \epsilon(\lambda, T) \times E(\lambda, T)$, thus the radiation intensity measured value $D(\lambda)$ of any target becomes,

$$D(\lambda) = \alpha \times \epsilon(\lambda, T) \times E(\lambda, T) \qquad (2)$$

where, $\alpha$ is a constant determined by a measuring device.

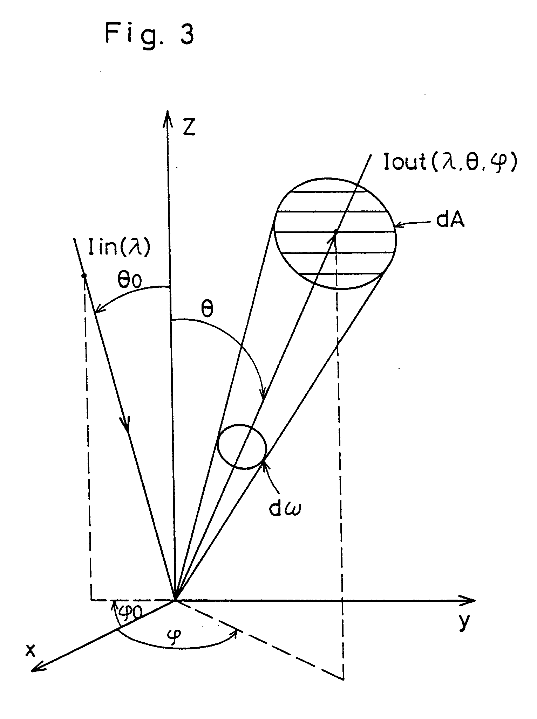

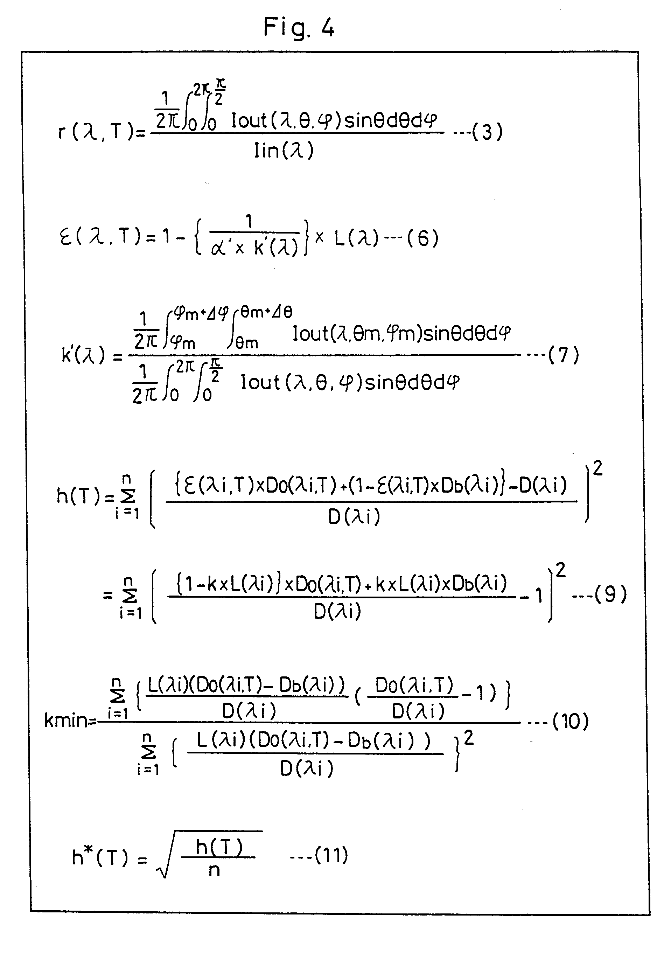

Next, as shown in Fig. 3, when a beam of light 4 of wavelengths $\lambda$ having the light intensity lin $(\lambda)$ is incident to the target TG and its reflected light 5 is reflected in various directions in angle $\theta$ at the light intensity lout $(\lambda, \theta, \phi)$, its hemispherical reflectance $\gamma(\lambda, T)$ is represented by the equation (3) shown in Fig. 4.

Relationship between the hemispherical reflectance $\gamma(\lambda, T)$ and emissivity $\epsilon(\lambda, T)$ with respect to a non-transmitting target becomes,

$$\epsilon(\lambda, T) + \gamma(\lambda, T) = 1 \qquad (4)$$

While,

$$L(\lambda) = \alpha' \times k'(\lambda) \times \gamma(\lambda, T) \qquad (5)$$

is established between the hemispherical reflection intensity $\gamma(\lambda, T)$ and measured reflection $L(\lambda)$. From the above equations (4), (5), equation (6) shown in Fig. 4 is obtained. Here, as same as aforesaid $\alpha$, $\alpha'$ is a constant determined by the measuring device, and $k'(\lambda)$ is a coefficient relative to an angular characteristic of the reflected light decided by the surface condition of the target to be measured. More specifically, when measurement was performed by the reflected light measuring device having the measured light view angle $\Delta\theta$ at the position of $\theta = \theta m$, $k'(\lambda)$ becomes as shown in equation (7) of Fig. 4. That is, $k'(\lambda)$ is the ratio of actually measured reflected light to the whole reflected light.

Now, it is believed that a difference of $k'(\lambda)$ due to wavelength is very small when the wavelength close to the measured wavelength is used.

This, the emissivity $\epsilon(\lambda, T)$ is shown as the following equation,

$$\epsilon(\lambda, T) = 1 - k \times L(\lambda) \qquad (8)$$

Where, coefficient k is a constant. Now, in this equation there are two unknowns, the coefficient k and temperature T. Thus, T can be calculated in principle if two wavelengths are used. However, assumption of equation (8) is not always established completely, on the contrary it is believed that minor errors are inevitable in most cases. Measuring erros are, in practice, inevitable.

Thus, it is not preferable to calculate T directly from equation (8) as the resulting temperature T is influenced by measuring errors as same as the aforesaid Japanese Patent Laid-Open No. 30727/1986. Therefore, the temperature is calculated so as to minimize the difference between the assumed radiation intensity and measured radiation intensity to restrain the influence of such errors as much as possible. Now, the temperature calculation performed by taking into account of removing the influence of so-called background radiation intensity, whereby not only the intensity emitted from the target itself but also the radiation intensities of the other objects reflected by said target all entered into a measuring system, will be explained.

First, coefficient h (T) is defined as a function which evaluates the degree of errors between the assumed radiation intensity $\epsilon(\lambda, T) \times Do(\lambda, T)$ [ = $\{1 - k \times L(\lambda)\} \times Do(\lambda, T)$ ] and radiation intensity measured value $D(\lambda)$. At this time, by measuring the background radiation intensity $Db(\lambda)$ with the measuring circuit DM in Fig. 2, or by using $Db(\lambda)$ inputted from the background radiation intensity input circuit DI when $Db(\lambda)$ is known, the assumed radiation intensity is determined as [ $\epsilon(\lambda, T) \times Do(\lambda, T) + \{1 - \epsilon(\lambda, T)\} \times Db(\lambda)$ ], and h (T) is represented as a sum of squares every wavelength of the difference between the assumed radiation intensity and radiation intensity measured value $D(\lambda)$ as equation (9) shown in Fig. 4. Here, a denominator $D(\lambda_1)$ serves to delete the weight by the wavelength. Since the equation (9) is a quadratic equation of unknown k, k(= kmin) which makes h(T) minimum with respect to a certain temperature T, takes an extreme value, thus it can be obtained

from $dh(T)/dk = 0$ as equation (10) in Fig. 4, and h-(T) is obtained by substituting kmin of equation (10) in equation (9).

From the standpoint of theory of errors, since errors are evaluated regardless of the number n of wavelength, further a square root of least square error $h^*(T)$ as shown in equation (11) in Fig. 4 is calculated from $h(T)$ thus obtained as described heretobefore. The aforesaid calculation is repeatedly performed by changing T to obtain T where $h^*(T)$ becomes minimum. The temperature which makes $h^*(T)$ minimum is outputted as the temperature of the target to be measured.

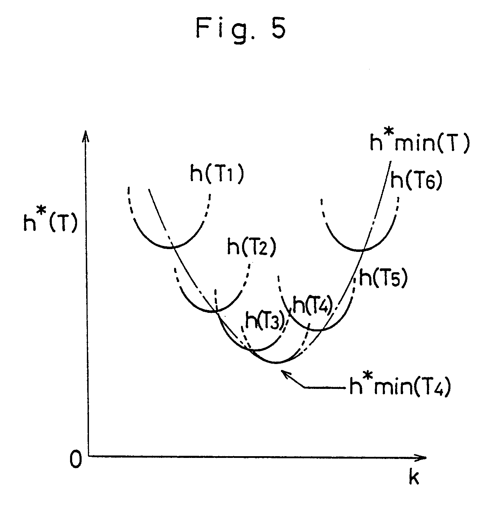

Fig. 5 shows a graph in which aforesaid mathematic meanings all illustrated intelligibly. First, six temperatures are taken as $T_1$, $T_2$, $\cdots$ $\cdots$ $T_6$, which are substituted in equation (9) successively one by one to obtain a quadratic functional graph. For example, when $T_1$ is substituted in equation (9), a curve is obtained as $h(T_1)$ by the value k, and representing $h(T)$ at $T = T_1$. Its minimum point is $h^*(T)$ when $T = T_1$ in equation (11). Now, assuming $h^*(T)$ of this point is $h^*min(T_1)$ and substituting $T_2$, $T_3$, $\cdots$ $\cdots$ $T_6$ similarly, the same curves are obtained successively and respective minimum values $h^*min(T_2)$, $h^*min(T_3)$, $\cdots$ $\cdots$ $h^*min(T_6)$ are obtained. A curve connecting these values forms a curve shown by $h^*min(T)$. The minimum value as a whole in this case is at $T_4$, which is the required temperature.

In practice, the temperature of the target to be measured may be decided by, (i) obtaining T which becomes minimum within the temperature range determined by various restricting conditions [ $\epsilon$ ($\lambda$, T) $\leqq$ 1 etc.] and measuring conditions, (ii) obtaining T which makes $h^*(T)$ extremely small and (iii) deciding a certain small range $\Delta$ to obtain T where $dh^*(T)/dT$ becomes smaller than $\Delta$.

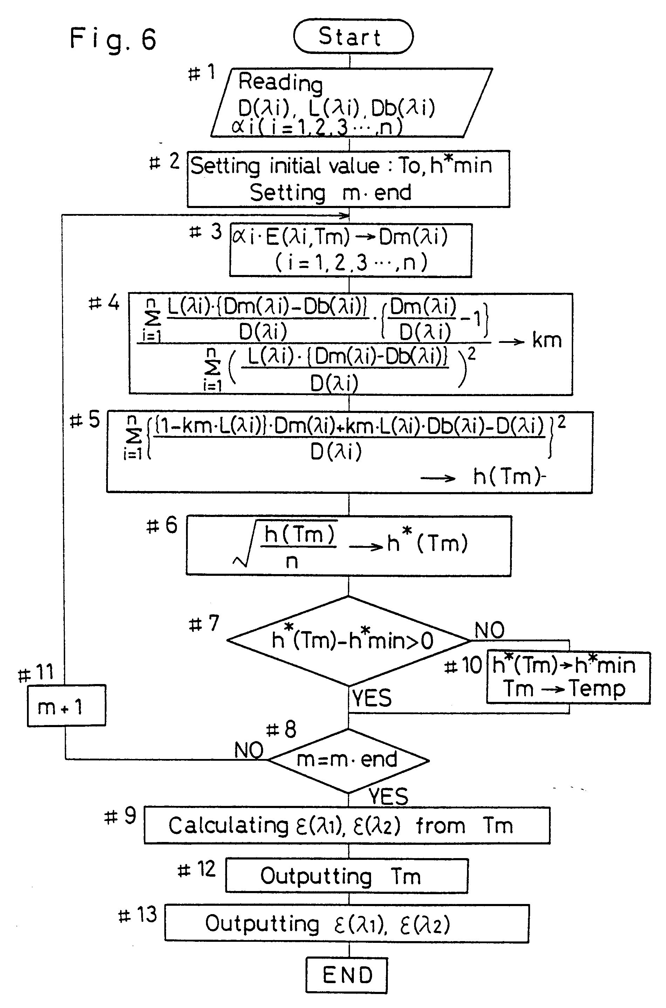

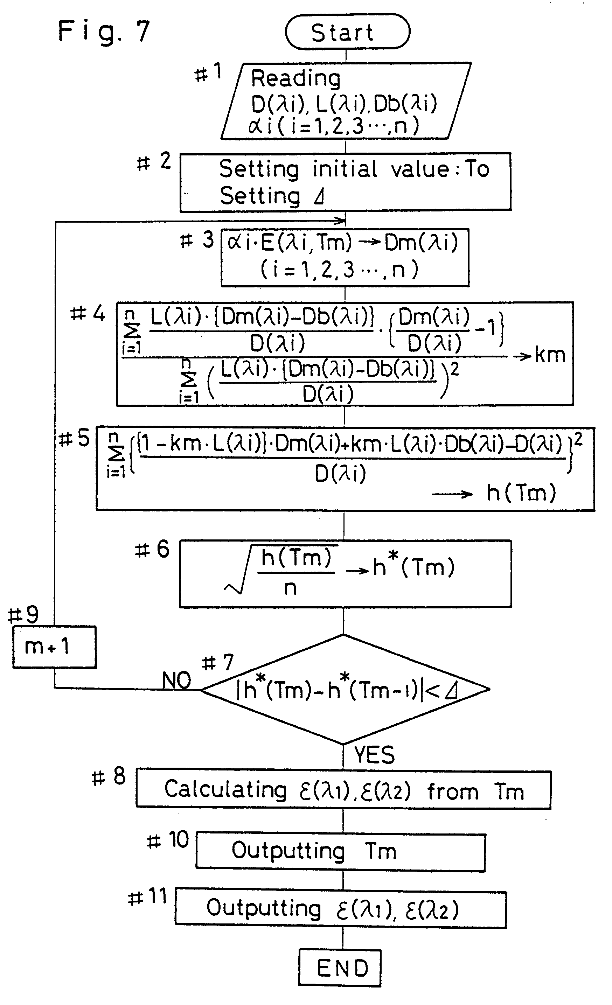

Figs. 6 and 7 show flow charts of calculation programs for obtaining the temperature in the calculating circuit TC by the methods aforementioned.

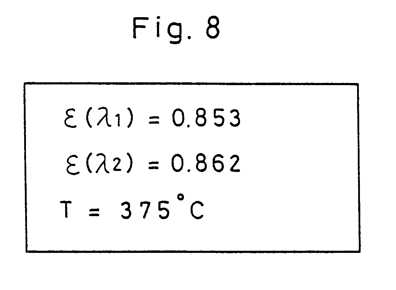

First, in the embodiment of Fig. 6, in (#1), the radiation intensity measured value $D(\lambda i)$, measured reflectance $L(\lambda i)$, background radiation intensity measured value $Db(\lambda i)$ and optical constant $\alpha i$ are read from the measured value. Next, in (# 2), a calculation starting temperature of the temperature T which is substituted in the above equations (9) ~ (11) is set at $T_0$, and the number of calculations from said $T_0$ to the measured temperature range at m • end respectively. For example, when setting the number of calculations of 500 within the temperature range from 1 °C to 500 °C, 1 °C is set for $T_0$ and 500 for m • end. A numerical value is set also for $h^*min$ in (#2), which is compared to $h^*(Tm)$ obtained as to be described later, and replaced by $h^*(Tm)$ when the latter is smaller, thus any relatively large value may be selected because it is an initial value in the process wherein data of every calculated results performed by changing the temperature are compared successively to obtain finally the smallest value. Next, $Dm(\lambda i)$ is obtained from the optical constant $\alpha i$ of each wavelength and energy $E(\lambda i, Tm)$ emitted from the blackbody having the temperature Tm (#3). Thereafter, $Dm(\lambda i)$ and $D(\lambda i)$ and $L(\lambda i)$, $Db(\lambda i)$ read in (#1) are substituted in equation shown in (#4) to obtain km. Meanwhile, the equation corresponds to equation (10) in Fig. 4 aforementioned. Next, values of km, $D(\lambda i)$, $Dm(\lambda i)$, $L(\lambda i)$, $Db(\lambda i)$ are substituted in the equation shown in (#5) to obtain $h(Tm)$. In addition, $h^*(Tm)$ is calculated from $h(Tm)$ and n (#6). In (#7), $h^*(Tm)$ and $h^*min$ are compared and when the former is smaller, $h^*min$ is made equal to $h^*(Tm)$ and the temperature Temp is made equal to Tm in (#10) before proceeding to (#8). When $h^*(Tm)$ is larger, proceeding directly to (#8), wherein it is checked whether m equals m • end, if not returned to (#3) as incrementing m by 1 (#11), if yes Temp is the required temperature. Emissivities $\epsilon$ ($\lambda_1$), $\epsilon$ ($\lambda_2$) at respective wavelengths ($\lambda_1$) ($\lambda_2$) at the temperature (Temp) are obtained again (#9) by using equation (6), and outputting these data to the indicating part IP (#12) (#13) to indicate the temperature (Temp) and emissivities $\epsilon$ ($\lambda_1$), $\epsilon$ ($\lambda_2$) to complete the calculation flow. Thus, the true temperature is obtained. An example of indication is shown in Fig. 8.

Next, in the embodiment of Fig. 7, a small threshold value $\Delta$ is prepared in advance and a temperature at the time when the difference between $h^*(Tm)$ obtained by two successive calculations becomes smaller than the threshold value $\Delta$ is determined as the true temperature, thus the whole calculations are not necessarily performed as in the case of Fig. 6, so that the calculation time can be reduced. It will be appreciated from a graph of Fig. 5 that the temperature Tm at the time when the difference between two successive $h^*(Tm)$ becomes smallest is the true temperature.

In Fig. 7, first the radiation intensity measured value $D(\lambda i)$, measured reflectance $L(\lambda i)$, background radiation intensity measured value $Db(\lambda i)$ and optical constant $\alpha i$, are read in (#1). Then, in (#2), the calculation starting temperature is set at $T_0$ and the threshold value at $\Delta$. Thereafter, $Dm(\lambda i)$ obtained in (#3) from the optical constant $\alpha i$, of each wavelength and energy $E(\lambda i, Tm)$ radiated from a blackbody of temperature Tm, and $L(\lambda i)$, $D(\lambda i)$, $Db(\lambda i)$ read previously are substituted in equation shown in (#4) to obtain km. Then, $h(Tm)$ is calculated from km and $L(\lambda i)$, $Dm(\lambda i)$, $D(\lambda i)$, $Db(\lambda i)$ in (#5). $h^*(Tm)$ can be readily calculated from $h(Tm)$ and n in (#6). In (#7), it is determined whether the difference between $h^*(Tm)$ and $h^*(T_{m-1})$ calculated at the previous temperature is smaller than the threshold value Δ, if larger, returning to (#3) as incrementing m (#9) and repeating the flow from (#3) onward. If smaller than Δ, emissivities $\epsilon(\lambda_1)$, $\epsilon(\lambda_2)$ at each wavelength $\lambda_1$, $\lambda_2$ at the temperture Tm are obtained again in (#8) as deeming the temperature Tm at that time as the true temperature, and these data are outputted to the indicating part IP (#10), (#11) to indicate the temperature Tm and emissivities $\epsilon(\lambda_1)$, $\epsilon(\lambda_2)$. Meanwhile, $T_{m-1}$ may be outputted as the true temperature in lieu of Tm.

In the aforesaid embodiments, though the emissivity $\epsilon$ has been assumed as

$$\epsilon(\lambda, T) = 1 - k \times L(\lambda)$$

as shown in equation (8), when k is variable on wavelength, temperature errors become relatively larger.

Therefore, in another embodiment of the present invention, the temperature is obtained as assuming,

$$\epsilon(\lambda, T) = 1 - k(\lambda) \times L(\lambda) \qquad (12)$$

where, k is a function of wavelength $\lambda$.

Here, $k(\lambda)$ is a function of $\lambda$ including less than (n-1) unknowns when the number of wavelengths used is represented by n.

Two calculating methods for obtaining the temperature on the basis of such assumption will be explained hereinbelow.

(First Calculating Method)

If $k(\lambda)$ is a function including (n-1) unknowns, the unknowns are totally n consisting of (n-1) unknowns and a temperature T. Thus, since wavelengths of n colors are used, the number of unknowns and conditional equations are coincided to give solution. As a specific example, calculation using three wavelengths and assuming $k(\lambda)$ as the following equation is shown.

$$k(\lambda) = a_0 + a_1 \cdot \lambda \qquad (13)$$

For $\lambda_1$, from equations (1) and (2),
$\epsilon(\lambda, T) D_0(\lambda_1) = D(\lambda_1)$, and from equations (12) and (13),

$\{1-(a_0 + a_1 \cdot \lambda_1)L(\lambda_1)\} \times D_0(\lambda_1) = D(\lambda_1)$, thus
$a_0 + a_1 \cdot \lambda_1 = F_1$

where,
$F_1 = \{1-D(\lambda_1)/D_0(\lambda_1)\}/L(\lambda_1)$

Similarly, also for $\lambda_2$, $\lambda_3$,

$a_0 + a_1 \cdot \lambda_2 = F_2$
$a_0 + a_1 \cdot \lambda_3 = F_3$

When eliminating $a_0$, $a_1$,

$$(F_2-F_1)/(\lambda_2-\lambda_1) = (F_3-F_2)/(\lambda_3-\lambda_2) \qquad (14)$$

It is not possible to solve equation (14) analytically with respect to the temperature T. However, $E(\lambda, T)$ can be calculated by the Planck formula relative to a certain temperature T, thereby $D_0(\lambda, T)$ can be obtained from equation (1). Since F can be calculated from the measured values $(D(\lambda)$, $L(\lambda)$, left and right sides of equation (14) are obtained.

By repeating the calculation for several Ts prepared in advance, T satisfying equation (14) can be obtained. The temperature T at this time can be deemed as the temperature of the target to be measured. If three wavelengths are selected to satisfy
$\lambda_2 = (\lambda_1 + \lambda_3)/2$, equation (14) becomes

$$2F_2 = F_1 + F_3 \qquad (15)$$

The equation (15) looks simple and seems to be easy to calculate.

(Second Calculating Method)

A second calculating method is to calculate a temperature by taking errors into account from the beginning. That is, though accuracy of the calculated temperature is decided by assuming $k(\lambda)$ in what extent in the assumption of equation (12), errors are possibly involved whatever $k(\lambda)$ is introduced. As described in the previous embodiments, in practice, measured errors are inevitable in the measured values. Therefore, temperature calculation is performed in the following conception.

A function h(T) is defined as the function which evaluates the errors of assumed radiation intensity, $\epsilon(\lambda) \times D_0(\lambda, T) [ = \{1-k(\lambda) \times L(\lambda)\} \times D_0(\lambda, T)]$ and radiation intensity measured value $D(\lambda)$.

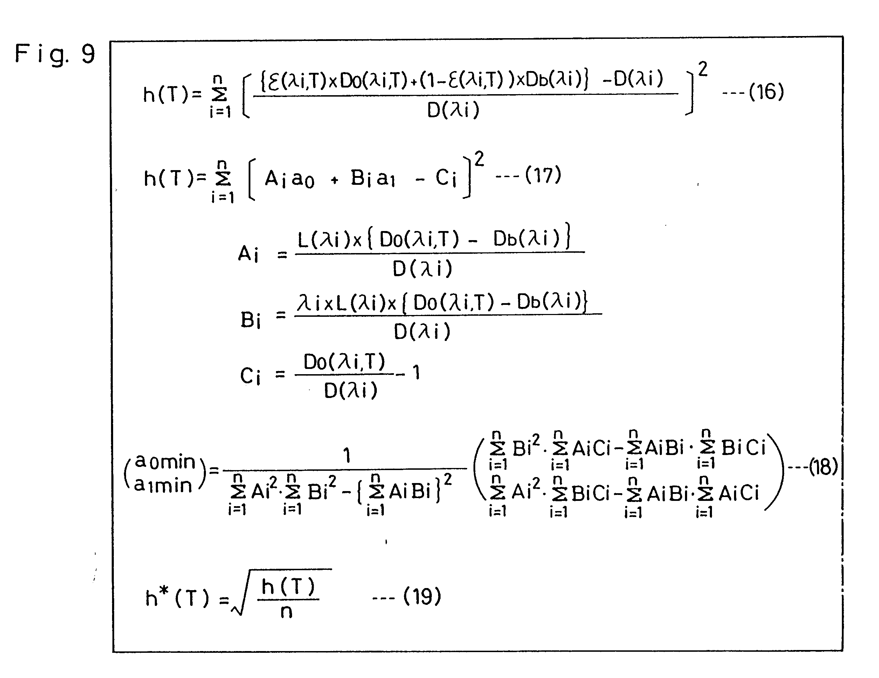

As a specific example, the background radiation intensity $Db(\lambda)$ is measured by using the wavelengths of n colors (n ≧ 3), or by using $Db(\lambda)$ inputted from the background radiation intensity input circuit DI when $Db(\lambda)$ is known, taking into account of removing influence of background radiation and defining h(T) as a sum of squares every wavelength of the difference between the assumed radiation intensity $[\epsilon(\lambda,T) \times D_0(\lambda, T) + \{1-\epsilon(\lambda, T)\} Db(\lambda)]$ and radiation intensity measured value $D(\lambda)$, the temperature is calculated as assuming $k(\lambda) = 1/\{\alpha' \times k'(\lambda)\}$ from equations (6) and (7). The equation of h(T) is shown by equations (16) (17) in Fig. 9. Since equation (17) is a quadratic equation of unknowns $a_0$, $a_1$, $a_0(=a_0 min)$ and $a_1(=a_1 min)$

which minimize h(T) relative to a certain temperature T are $a_0$ and $a_1$ at the extreme value of h(T). Accordingly, they can be obtained from equations $2h(T)/2a_0 = 0$ and $2h(T)/2a_1 = 0$.

These $a_0$ min and $a_1$ min are shown in vertical matrixes in Fig. 9 as equation (18). $a_0$ min and $a_1$ min shown in equation (18) are substituted in equation (17) to obtain h(T). From h(T) thus obtained, further a square root of least square error h*(T) as shown in equation (19) in Fig. 9 is calculated. T may be searched by repeating the aforesaid calculation as changing T until smallest h*(T) is obtained. The temperature which makes smallest h*(T) is outputted as the temperature of the target to be measured.

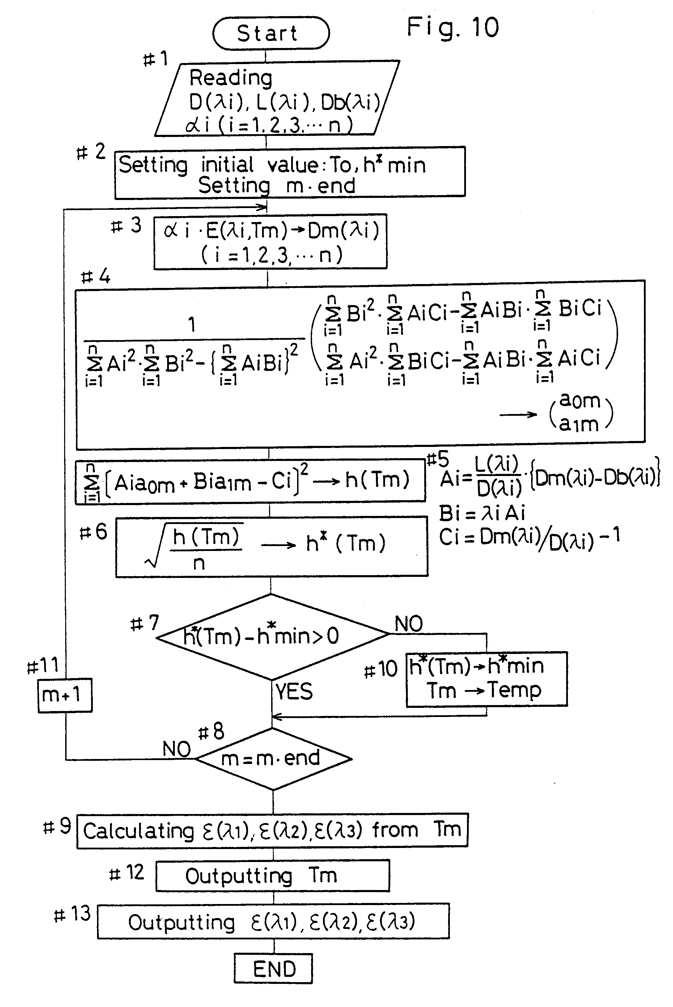

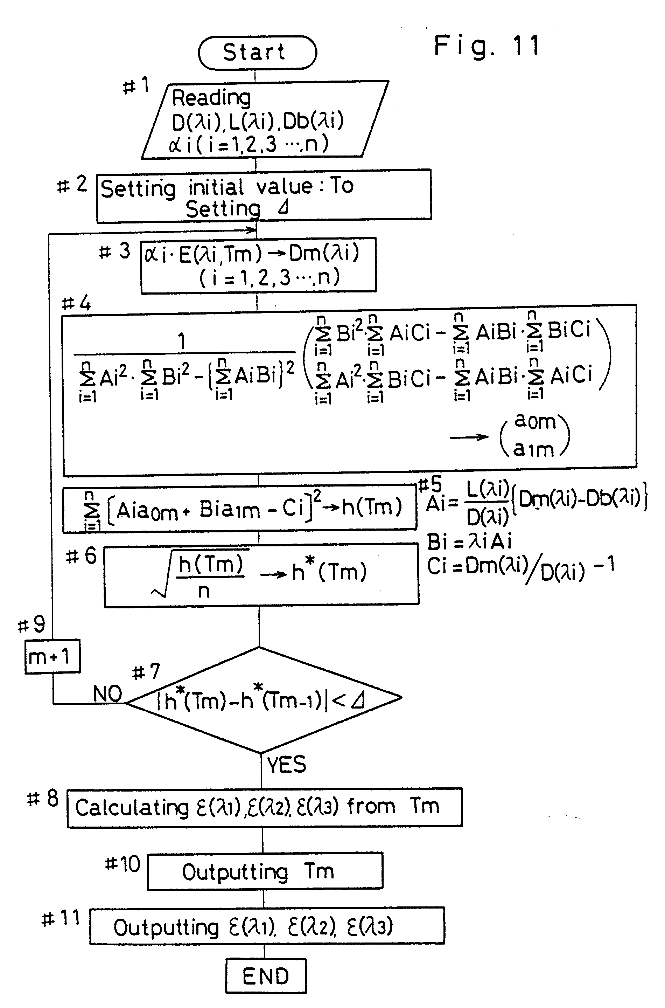

Figs. 10 and 11 show flow charts of calculating programs for obtaining a correct solution in a calculating circuit TC according to the second calculating method described hereinabove.

These flow charts in Figs. 10 and 11 are respectively in proportion to the flow charts in Figs. 6 and 7, and their procedures are also similar, therefore its explanation will be omitted.

However, since Figs. 10 and 11 are for the case of three wavelengths, calculation of the emissivity in (#9) and its output in (#13) of Fig. 10 are also performed for $\epsilon$ ($\lambda_3$). Similarly, also in steps (#8), (#11) of Fig. 11, calculation and output for $\epsilon$ ($\lambda_3$) are respectively performed besides $\epsilon$ ($\lambda_2$) and $\epsilon$ ($\lambda_3$). In this case, the value of $\epsilon$ ($\lambda_3$) is added to the indication in Fig. 8.

Having described the present invention as related to the embodiments, the present invention is not limited thereto various changes and modifications are possible without departing from the scope and spirit of the invention claimed in the appended claims. For example, though an estimating function h(T) is defined as a sum of every wavelength of square of the difference between the assumed radiation intensity and radiation intensity measured value D($\lambda$) as equations (9) and (16), any h(T) may be acceptable if it is a function for estimating errors of the assumed radiation intensity and radiation intensity measured value. For example, it may be the sum of every wavelength of a differential absolute value of the assumed radiation intensity and radiation intensity measured value. In that case, evaluation of errors is made as h*(T) = h(T)/n in lieu of equations (11) and (19).

In the aforesaid embodiments, though the back ground radiation intensity Db($\lambda$) is measured or inputted to remove influence of the background radiation, it may be calculated as Db($\lambda$) = $\beta$ ($\lambda$)D$_0$-($\lambda$,Ts) by measuring or inputting the typical peripheral temperature Ts, and a contribution factor of energy radiated from the target of temperature Ts with respect to the whole background radiation intensity.

Though the embodiments shown in Figs. 1 and 2 are for three wavelengths, two wavelengths may be employed, as described above, if $\epsilon$ ($\lambda$, T) = 1 - k × L($\lambda$) is assumed. When $\epsilon$ ($\lambda$, T) = 1 - k($\lambda$) × L($\lambda$) is assumed, more than four wavelengths are also acceptable. In this case, the number of detectors, amplifiers etc. may just be changed.

Though an optical fiber FB is used for dividing light in Fig. 2, a half-mirror may be used or three filters may be moved in and out alternatively mechanically. With respect to a light source, pulse light such as a flash device may be used in place of a chopper.

## Claims

1. A pyrometer comprising
    (a) light emitting means (101; L) for emitting light having at least three wavelengths, to a target to be measured;
    (b) first light measuring means (110; $S_1$ to $S_3$) for measuring light emitted by said light emitting means with respect to said at least three wavelengths to produce first signals (P($\lambda_1$) to P($\lambda_3$));
    (c) second light measuring means (102; $S'_1$ to $S'_3$) for measuring light reflected by the target with respect to said at least three wavelengths to produce second signals (R($\lambda_1$) to R($\lambda_3$));
    (d) third light measuring means (102; $S'_1$ to $S'_3$) for measuring light radiated by the target with respect to said at least three wavelengths to produce third signals (D($\lambda_1$) to D($\lambda_3$));
    (e) emissivity assuming means for assuming an emissivity of the target on the basis of the following equation:

    $\epsilon(\lambda)$ = 1 x k x L($\lambda$)

    wherein
        $\epsilon(\lambda)$ represents an assumed emissivity of the target with respect to a wavelength ($\lambda$),
        k represents a coefficient, and
        L($\lambda$) represents information as to said second signals (R($\lambda_1$) to R($\lambda_3$)) with respect to a wavelength ($\lambda$); and
    (f) temperature calculating means (107; TC) for calculating the temperature of the target on the basis of the assumed emissivity and the first to third signals at each of said at least three wavelengths;
    **characterized** by
    (g) background information supply means (108; DM; DI) for supplying information on an intensity (Db($\lambda$)) of background radiation

of light coming from the background of the target;

(h) wherein said temperature calculating means (107; TC) is provided for calculating the temperature of the target on the basis of the assumed emissivity, the first to third signals and the information on the intensity of background radiation.

2. The pyrometer as claimed in claim 1, **characterized** in that the coefficient k is a constant.

3. The pyrometer as claimed in claim 1, **characterized** in that the coefficient k is a function of the wavelength ($\lambda$).

4. The pyrometer as claimed in claim 3, **characterized** in that the coefficient k is determined in accordance with the following equation:

$$k(\lambda) = a_0 + a_1 \times \lambda,$$

wherein

$a_0$ represents a constant, and
$a_1$ represents a constant.

5. The pyrometer as claimed in any of claims 1 to 4, **characterized** in that said background information supply means (108; DM) includes means for measuring light coming from the background with respect to at least two different wavelengths to produce information in accordance with the background radiation intensity ($Db(\lambda)$).

6. The pyrometer as claimed in any of claims 1 to 4, **characterized** in that said background information supply means (DI) includes means for inputting the background radiation intensity ($Db(\lambda)$).

7. The pyrometer as claimed in any of the preceding claims, **characterized** in that said background information supply means (108; DM; DI) with respect to said at least three wavelengths produce fourth signals ($Db(\lambda_1)$ to $Db(\lambda_3)$), and that said temperature calculating means (107; TC) is provided for calculating the temperature of the target on the basis of the assumed emissivity and the first to fourth signals.

8. The pyrometer as claimed in any of claims 1 to 7,

**characterized** in that said temperature calculating means includes means for calculating the temperature of the target on the basis of the minimum difference between the measured radiation intensity and the sum of the background radiation intensity and the assumed radiation intensity.

9. The pyrometer as claimed in any of claims 1 to 7, **characterized** in that said temperature calculating means includes means for calculating the temperature of the target on the basis of the minimum sum of squares every wavelength of the difference between the assumed radiation intensity and the measured radiation intensity.

10. The pyrometer as claimed in any of the preceding claims, **characterized** by temperature indicating means (109; IP) for indicating the temperature calculated by said temperature calculating means (107; TC).

11. The pyrometer as claimed in any of the preceding claims, **characterized** by emissivity calculating means for calculating an emissivity of the target at the calculated temperature, and by emissivity indicating means for indicating the emissivity calculated by said emissivity calculating means at the calculated temperature.

**Patentansprüche**

1. Pyrometer mit
(a) einer Lichtemissionseinrichtung (101; L) zum Emittieren von Licht mit zumindest drei Wellenlängen auf ein zu messendes Ziel;
(b) einer ersten Lichtmeßeinrichtung (110; S1 bis S3) zum Messen von Licht, emittiert durch die Lichtemissionseinrichtung bezüglich der zumindest drei Wellenlängen zum Erzeugen von ersten Signalen (P($\lambda$1) bis P($\lambda$3));
(c) einer zweiten Lichtmeßeinrichtung (102; S'1 bis S'3) zum Messen von Licht, reflektiert durch das Ziel bezüglich der zumindest drei Wellenlängen zum Erzeugen von zweiten Signalen (R($\lambda$1) bis R($\lambda$3));
(d) einer dritten Lichtmeßeinrichtung (102; S'1 bis S'3) zum Messen von Licht, abgestrahlt durch das Ziel bezüglich der zumindest drei Wellenlängen zum Erzeugen von dritten Signalen (D($\lambda$1) bis D($\lambda$3));
(e) einer Emissionsannahmeeinrichtung zum Annehmen eines Emissionsvermögens des Ziels auf der Basis der folgenden Glei-

chung:

$$\epsilon(\lambda) = 1 - k \times L(\lambda)$$

wobei

$\epsilon(\lambda)$ ein angenommenes Emissionsvermögen des Ziels bezüglich einer Wellenlänge ($\lambda$) darstellt,

k einen Koeffizienten darstellt, und

$L(\lambda)$ eine Information bezüglich der zweiten Signale ($R(\lambda 1)$ bis $R(\lambda 3)$) bezüglich einer Wellenlänge ($\lambda$) darstellt; und

(f) einer Temperaturberechnungs-Einrichtung (107; TC) zum Berechnen der Temperatur des Ziels auf der Basis des angenommenen Emissionsvermögens und der ersten bis dritten Signale bei jeder der zumindest drei Wellenlängen;

**gekennzeichnet** durch

(g) eine Hintergrundinformation-Zuführungseinrichtung (108; DM; DI) zum Zuführen von Information über eine Intensität ($Db(\lambda)$) von Hintergrundstrahlung von Licht, herrührend von dem Hintergrund des Ziels;

(h) wobei die Temperaturberechnungs-Einrichtung (107; TC) vorgesehen ist zum Berechnen der Temperatur des Ziels auf der Basis des angenommenen Emissionsvermögens, der ersten bis dritten Signale und der Information über die Intensität der Hintergrundstrahlung.

2. Pyrometer nach Anspruch 1,
dadurch **gekennzeichnet,** daß
der Koeffizient k eine Konstante ist.

3. Pyrometer nach Anspruch 1,
dadurch **gekennzeichnet,** daß
der Koeffizient k eine Funktion der Wellenlänge ($\lambda$) ist.

4. Pyrometer nach Anspruch 3,
dadurch **gekennzeichnet,** daß
der Koeffizient k bestimmt wird in Übereinstimmung mit der folgenden Gleichung:

$$k(\lambda) = a0 + a1 \times \lambda$$

wobei
a0 eine Konstante und
a1 eine Konstante repräsentiert.

5. Pyrometer nach einem der Ansprüche 1 bis 4,
dadurch **gekennzeichnet,** daß
die Hintergrundinformations-Zuführungseinrichtung (108; DM) eine Einrichtung beinhaltet zum Messen von Licht, kommend von dem Hintergrund bezüglich von zumindest zwei verschiedenen Wellenlängen zum Erzeugen von Information in Übereinstimmung mit der Hintergrundstrahlungs-Intensität ($Db(\lambda)$).

6. Pyrometer nach einem der Ansprüche 1 bis 4,
dadurch **gekennzeichnet,** daß
die Hintergrundinformations-Zuführungseinrichtung (DI) eine Einrichtung beinhaltet zum Eingeben der Hintergrundstrahlungs-Intensität ($Db(\lambda)$).

7. Pyrometer nach einem der vorhergehenden Ansprüche,
dadurch **gekennzeichnet,** daß
die Hintergrundinformations-Zuführungseinrichtung (108; DM; DI) bezüglich der zumindest drei Wellenlängen vierte Signale erzeugt ($Db(\lambda 1)$ bis $Db(\lambda 3)$) und daß die Temperaturberechnungs-Einrichtung (107; TC) vorgesehen ist zum Berechnen der Temperatur des Ziels auf der Basis des angenommenen Emissionsvermögens und der ersten bis vierten Signale.

8. Pyrometer nach einem der Ansprüche 1 bis 7,
dadurch **gekennzeichnet,** daß
die Temperaturberechnungs-Einrichtung eine Einrichtung beinhaltet zum Berechnen der Temperatur des Ziels auf der Basis der minimalen Differenz zwischen der gemessenen Strahlungsintensität und der Summe der Hintergrundstrahlungs-Intensität und der angenommenen Strahlungsintensität.

9. Pyrometer nach einem der Ansprüche 1 bis 7,
dadurch **gekennzeichnet,** daß
die Temperaturberechnungs-Einrichtung eine Einrichtung beinhaltet zum Berechnen der Temperatur des Ziels auf der Basis der minimalen Summe von Quadraten jeder Wellenlänge der Differenz zwischen der angenommenen Strahlungsintensität und der gemessenen Strahlungsintensität.

10. Pyrometer nach einem der vorhergehenden Ansprüche,
**gekennzeichnet** durch
eine Temperaturanzeige-Einrichtung (109; IP) zum Anzeigen der Temperatur, berechnet durch die Temperaturberechnungs-Einrichtung (107; TC).

11. Pyrometer nach einem der vorhergehenden Ansprüche,
**gekennzeichnet** durch
eine Emissionsvermögen-Berechnungseinrichtung zum Berechnen eines Emissionsvermögens des Ziels bei der berechneten Temperatur und durch eine Emissionsvermögen-Anzeigeeinrichtung zum Anzeigen von dem von der Emissionsvermögen-Berechnungseinrichtung berechneten Emissionsvermögen bei der berechneten Temperatur.

**Revendications**

1. Pyromètre comprenant :

(a) un moyen d'émission de la lumière (101 ; L) pour émettre une lumière ayant au moins trois longueurs d'onde vers une cible qui doit être mesurée ;

(b) un premier moyen de mesure de lumière (110 ; $S_1$ à $S_3$) pour mesurer la lumière émise par le moyen d'émission de lumière par rapport à au moins trois longueurs d'onde afin de produire des premiers signaux ($P(\lambda_1)$ à $P(\lambda_3)$) ;

(c) un second moyen de mesure de la lumière (102 ; $S'_1$ à $S'_3$) pour mesurer la lumière réfléchie par la cible par rapport à au moins trois longueurs d'onde afin de produire des seconds signaux ($R(\lambda_1)$ à $R(\lambda_3)$) ;

(d) un troisième moyen de mesure de la lumière (102 ; $S'_1$ à $S'_3$) pour mesurer la lumière rayonnée par la cible par rapport à au moins trois longueurs d'onde afin de produire des troisièmes signaux ($D(\lambda_1)$ à $D(\lambda_3)$) ;

(e) un moyen d'hypothèse de pouvoir d'émission pour supposer un pouvoir d'émission de la cible sur la base de l'équation suivante :

$$\epsilon(\lambda) = 1 - k \times L(\lambda)$$

dans laquelle

$\epsilon(\lambda)$ représente un pouvoir d'émission supposé de la cible par rapport à une longueur d'onde ($\lambda$),

k représente un coefficient, et

$L(\lambda)$ représente des informations concernant lesdits seconds signaux ($R(\lambda_1)$ à $R(\lambda_3)$) par rapport à une longueur d'onde ($\lambda$), et

(f) un moyen de calcul de température (107 ; TC) pour calculer la température de la cible sur la base du pouvoir d'émission supposé et des premier à troisième signaux à chacune des au moins trois longueurs d'onde ;

caractérisé par

(g) un moyen de délivrance d'information de fond (108 ; DM ; DI) pour délivrer des informations sur une intensité ($Db(\lambda)$) du rayonnement de lumière de fond venant à partir du fond de la cible ;

(h) dans lequel le moyen de calcul de la température (107 ; TC) est prévu pour calculer la température de la cible sur la base du pouvoir d'émission supposé, des premier à troisième signaux et de l'information se rapportant à l'intensité du rayonnement du fond.

2. Pyromètre selon la revendication 1, caractérisé en ce que le coefficient k est une constante.

3. Pyromètre selon la revendication 1, caractérisé en ce que le coefficient k est une fonction de la longueur d'onde ($\lambda$).

4. Pyromètre selon la revendication 3, caractérisé en ce que le coefficient k est déterminé en conformité avec l'équation suivante :

$$k(\lambda) = a_0 + a_1 \times \lambda,$$

dans laquelle

$a_0$ représente une constante, et

$a_1$ représente une constante.

5. Pyromètre selon l'une quelconque des revendications 1 à 4, caractérisé en ce que le moyen de délivrance d'information de fond (108 ; DM) comporte un moyen pour mesurer la lumière venant du fond par rapport à au moins deux longueurs d'onde différentes afin de produire des informations en conformité avec l'intensité du rayonnement du fond ($Db(\lambda)$).

6. Pyromètre selon l'une quelconque des revendications 1 à 4, caractérisé en ce que le moyen de délivrance d'information de fond (DI) comporte un moyen pour entrer l'intensité du rayonnement du fond ($Db(\lambda)$).

7. Pyromètre selon l'une quelconque des revendications précédentes, caractérisé en ce que le moyen de délivrance d'information de fond (108 ; DM ; DI) par rapport auxdites au moins trois longueurs d'onde produit des quatrièmes signaux ($Db(\lambda_1)$ à $Db(\lambda_3)$), et en ce que le moyen de calcul de température (107 ; TC) est prévu pour calculer la température de la cible sur la base du pouvoir d'émission supposé et des premier à quatrième signaux.

8. Pyromètre selon l'une quelconque des revendications 1 à 7, caractérisé en ce que le moyen de calcul de température comporte un moyen pour calculer la température de la cible sur la base de la différence minimale entre l'intensité du rayonnement mesuré et la somme de l'intensité du rayonnement de fond et de l'intensité du rayonnement supposé.

9. Pyromètre selon l'une quelconque des revendications 1 à 7, caractérisé en ce que le moyen de calcul de température comporte un moyen pour calculer la température de la cible sur la base de la somme minimale des carrés à chaque longueur d'onde de la différence entre l'intensité du rayonnement supposé et l'intensité du rayonnement mesuré.

10. Pyromètre selon l'une quelconque des revendications précédentes, caractérisé par un moyen d'affichage de température (109 ; IP) pour afficher la température calculée par le moyen de calcul de température (107 ; TC).

11. Pyromètre selon l'une quelconque des revendications précédentes, caractérisé par un moyen de calcul de pouvoir d'émission pour calculer un pouvoir d'émission de la cible à la température calculée, et par un moyen d'affichage de pouvoir d'émission pour afficher le pouvoir d'émission calculé par le moyen de calcul de pouvoir d'émission à la température calculée.

# Fig. 1

Fig. 2

EP 0 294 747 B1

Fig. 3

Fig. 4

$$r(\lambda, T) = \frac{\frac{1}{2\pi}\int_0^{2\pi}\int_0^{\frac{\pi}{2}} Iout(\lambda, \theta, \varphi)\sin\theta d\theta d\varphi}{Iin(\lambda)} \quad \cdots(3)$$

$$\mathcal{E}(\lambda, T) = 1 - \left\{\frac{1}{\alpha' \times k'(\lambda)}\right\} \times L(\lambda) \quad \cdots(6)$$

$$k'(\lambda) = \frac{\frac{1}{2\pi}\int_{\varphi m}^{\varphi m+\varDelta\varphi}\int_{\theta m}^{\theta m+\varDelta\theta} Iout(\lambda, \theta m, \varphi m)\sin\theta d\theta d\varphi}{\frac{1}{2\pi}\int_0^{2\pi}\int_0^{\frac{\pi}{2}} Iout(\lambda, \theta, \varphi)\sin\theta d\theta d\varphi} \quad \cdots(7)$$

$$h(T) = \sum_{i=1}^{n}\left(\frac{\{\mathcal{E}(\lambda i, T)\times Do(\lambda i, T)+(1-\mathcal{E}(\lambda i, T)\times Db(\lambda i)\}-D(\lambda i)}{D(\lambda i)}\right)^2$$

$$= \sum_{i=1}^{n}\left(\frac{\{1-k\times L(\lambda i)\}\times Do(\lambda i, T)+k\times L(\lambda i)\times Db(\lambda i)}{D(\lambda i)}-1\right)^2 \quad \cdots(9)$$

$$kmin = \frac{\sum_{i=1}^{n}\left\{\frac{L(\lambda i)(Do(\lambda i, T)-Db(\lambda i))}{D(\lambda i)}\left(\frac{Do(\lambda i, T)}{D(\lambda i)}-1\right)\right\}}{\sum_{i=1}^{n}\left\{\frac{L(\lambda i)(Do(\lambda i, T)-Db(\lambda i))}{D(\lambda i)}\right\}^2} \quad \cdots(10)$$

$$h^*(T) = \sqrt{\frac{h(T)}{n}} \quad \cdots(11)$$

Fig. 5

Fig. 6

$$\text{Start}$$

#1 Reading
$D(\lambda i),\ L(\lambda i),\ Db(\lambda i)$
$\alpha i\ (i=1,2,3\cdots,n)$

#2 Setting initial value : $To, h^*min$
Setting $m\cdot end$

#3 $\alpha i\cdot E(\lambda i, Tm) \rightarrow Dm(\lambda i)$
$(i=1,2,3\cdots,n)$

#4 $$\dfrac{\displaystyle\sum_{i=1}^{n}\dfrac{L(\lambda i)\cdot\{Dm(\lambda i)-Db(\lambda i)\}}{D(\lambda i)}\cdot\left(\dfrac{Dm(\lambda i)}{D(\lambda i)}-1\right)}{\displaystyle\sum_{i=1}^{n}\left(\dfrac{L(\lambda i)\cdot\{Dm(\lambda i)-Db(\lambda i)\}}{D(\lambda i)}\right)^2} \rightarrow km$$

#5 $$\sum_{i=1}^{n}\left\{\dfrac{\{1-km\cdot L(\lambda i)\}\cdot Dm(\lambda i)+km\cdot L(\lambda i)\cdot Db(\lambda i)-D(\lambda i)}{D(\lambda i)}\right\}^2 \longrightarrow h(Tm)$$

#6 $$\sqrt{\dfrac{h(Tm)}{n}} \longrightarrow h^*(Tm)$$

#7 $h^*(Tm)-h^*min>0$ — NO

#10 $h^*(Tm)\rightarrow h^*min$
$Tm \rightarrow Temp$

#11 $m+1$

YES

#8 $m=m\cdot end$ — NO

YES

#9 Calculating $\mathcal{E}(\lambda_1),\ \mathcal{E}(\lambda_2)$ from $Tm$

#12 Outputting $Tm$

#13 Outputting $\mathcal{E}(\lambda_1),\ \mathcal{E}(\lambda_2)$

END

Fig. 7

Start

#1 Reading
$D(\lambda i), L(\lambda i), Db(\lambda i)$
$\alpha i (i=1,2,3\cdots,n)$

#2 Setting initial value: To
Setting $\Delta$

#3 $\alpha i \cdot E(\lambda i, Tm) \rightarrow Dm(\lambda i)$
$(i=1,2,3\cdots,n)$

#4 $$\frac{\sum\limits_{i=1}^{n} \dfrac{L(\lambda i)\cdot\{Dm(\lambda i)-Db(\lambda i)\}}{D(\lambda i)}\cdot\left\{\dfrac{Dm(\lambda i)}{D(\lambda i)}-1\right\}}{\sum\limits_{i=1}^{n}\left(\dfrac{L(\lambda i)\cdot\{Dm(\lambda i)-Db(\lambda i)\}}{D(\lambda i)}\right)^2} \rightarrow km$$

#5 $$\sum\limits_{i=1}^{n}\left\{\frac{\{1-km\cdot L(\lambda i)\}\cdot Dm(\lambda i)+km\cdot L(\lambda i)\cdot Db(\lambda i)-D(\lambda i)}{D(\lambda i)}\right\}^2 \longrightarrow h(Tm)$$

#6 $$\sqrt{\frac{h(Tm)}{n}} \rightarrow h^*(Tm)$$

#9 $m+1$

#7 NO $|h^*(Tm)-h^*(Tm-1)| < \Delta$

YES

#8 Calculating $\varepsilon(\lambda_1), \varepsilon(\lambda_2)$ from Tm

#10 Outputting Tm

#11 Outputting $\varepsilon(\lambda_1), \varepsilon(\lambda_2)$

END

Fig. 8

$$\varepsilon(\lambda_1) = 0.853$$
$$\varepsilon(\lambda_2) = 0.862$$
$$T = 375°C$$

# Fig. 9

$$h(T) = \sum_{i=1}^{n} \left[ \frac{\{\mathcal{E}(\lambda_i,T) \times Do(\lambda_i,T) + (1 - \mathcal{E}(\lambda_i,T)) \times Db(\lambda_i)\} - D(\lambda_i)}{D(\lambda_i)} \right]^2 \quad \text{---}(16)$$

$$h(T) = \sum_{i=1}^{n} \left[ A_i a_0 + B_i a_1 - C_i \right]^2 \quad \text{---}(17)$$

$$A_i = \frac{L(\lambda_i) \times \{Do(\lambda_i,T) - Db(\lambda_i)\}}{D(\lambda_i)}$$

$$B_i = \frac{\lambda_i \times L(\lambda_i) \times \{Do(\lambda_i,T) - Db(\lambda_i)\}}{D(\lambda_i)}$$

$$C_i = \frac{Do(\lambda_i,T)}{D(\lambda_i)} - 1$$

$$\begin{pmatrix} a_{0min} \\ a_{1min} \end{pmatrix} = \frac{1}{\sum_{i=1}^{n} A_i^2 \cdot \sum_{i=1}^{n} B_i^2 - \left\{ \sum_{i=1}^{n} A_i B_i \right\}^2} \begin{pmatrix} \sum_{i=1}^{n} B_i^2 \cdot \sum_{i=1}^{n} A_i C_i - \sum_{i=1}^{n} A_i B_i \cdot \sum_{i=1}^{n} B_i C_i \\ \sum_{i=1}^{n} A_i^2 \cdot \sum_{i=1}^{n} B_i C_i - \sum_{i=1}^{n} A_i B_i \cdot \sum_{i=1}^{n} A_i C_i \end{pmatrix} \quad \text{---}(18)$$

$$h^*(T) = \sqrt{\frac{h(T)}{n}} \quad \text{---}(19)$$

EP 0 294 747 B1

Fig. 10

Start

#1 Reading
$D(\lambda i)$, $L(\lambda i)$, $Db(\lambda i)$
$\alpha i$ ($i = 1, 2, 3, \cdots n$)

#2 Setting initial value: $T_0$, $h^x$ min
Setting $m \cdot end$

#3 $\alpha i \cdot E(\lambda i, T_m) \rightarrow D_m(\lambda i)$
($i = 1, 2, 3, \cdots n$)

#4
$$\frac{1}{\sum\limits_{i=1}^{n} Ai^2 \cdot \sum\limits_{i=1}^{n} Bi^2 - \left\{\sum\limits_{i=1}^{n} AiBi\right\}^2} \begin{pmatrix} \sum\limits_{i=1}^{n} Bi^2 \cdot \sum\limits_{i=1}^{n} AiCi - \sum\limits_{i=1}^{n} AiBi \cdot \sum\limits_{i=1}^{n} BiCi \\ \sum\limits_{i=1}^{n} Ai^2 \cdot \sum\limits_{i=1}^{n} BiCi - \sum\limits_{i=1}^{n} AiBi \cdot \sum\limits_{i=1}^{n} AiCi \end{pmatrix} \longrightarrow \begin{pmatrix} a_{0m} \\ a_{1m} \end{pmatrix}$$

#5 $Ai = \dfrac{L(\lambda i)}{D(\lambda i)} \cdot \left\{D_m(\lambda i) - Db(\lambda i)\right\}$

$Bi = \lambda i Ai$

$Ci = D_m(\lambda i)/D(\lambda i) - 1$

$\sum\limits_{i=1}^{n} \left[Ai a_{0m} + Bi a_{1m} - Ci\right]^2 \longrightarrow h(T_m)$

#6 $\sqrt{\dfrac{h(T_m)}{n}} \longrightarrow h^x(T_m)$

#7 $h^*(T_m) - h^* min > 0$ — NO

#10 $h^*(T_m) \rightarrow h^* min$
$T_m \rightarrow Temp$

YES

#11 $m+1$

#8 $m = m \cdot end$ — NO

#9 Calculating $\varepsilon(\lambda 1), \varepsilon(\lambda 2), \varepsilon(\lambda 3)$ from $T_m$

#12 Outputting $T_m$

#13 Outputting $\varepsilon(\lambda 1), \varepsilon(\lambda 2), \varepsilon(\lambda 3)$

END

# Fig. 11

$$\#1\quad \text{Reading}\ D(\lambda i), L(\lambda i), Db(\lambda i)\ \alpha i\,(i=1,2,3\cdots,n)$$

$$\#2\quad \text{Setting initial value : To}\\ \text{Setting } \Delta$$

$$\#3\quad \alpha i \cdot E(\lambda i, Tm) \rightarrow Dm(\lambda i)\\ (i=1,2,3\cdots,n)$$

$$\#4\quad \frac{1}{\sum_{i=1}^{n} Ai^2 \cdot \sum_{i=1}^{n} Bi^2 - \left\{\sum_{i=1}^{n} AiBi\right\}^2} \begin{pmatrix} \sum_{i=1}^{n} Bi^2 \cdot \sum_{i=1}^{n} AiCi - \sum_{i=1}^{n} AiBi \cdot \sum_{i=1}^{n} BiCi \\ \sum_{i=1}^{n} Ai^2 \cdot \sum_{i=1}^{n} BiCi - \sum_{i=1}^{n} AiBi \cdot \sum_{i=1}^{n} AiCi \end{pmatrix}$$

$$\longrightarrow \begin{pmatrix} a_{0m} \\ a_{1m} \end{pmatrix}$$

$$\sum_{i=1}^{n} \left[ Ai a_{0m} + Bi a_{1m} - Ci \right]^2 \rightarrow h(Tm)$$

$$\#5\quad Ai = \frac{L(\lambda i)}{D(\lambda i)} \left\{ Dm(\lambda i) - Db(\lambda i) \right\}$$

$$\#6\quad \sqrt{\frac{h(Tm)}{n}} \longrightarrow h^*(Tm)$$

$$Bi = \lambda i Ai$$

$$Ci = Dm(\lambda i) / D(\lambda i) - 1$$

$$\#9\quad \boxed{m+1}$$

$$\#7\quad \text{NO} \quad |h^*(Tm) - h^*(Tm-1)| < \Delta \quad \text{YES}$$

$$\#8\quad \text{Calculating } \mathcal{E}(\lambda_1), \mathcal{E}(\lambda_2), \mathcal{E}(\lambda_3) \text{ from } Tm$$

$$\#10\quad \text{Outputting } Tm$$

$$\#11\quad \text{Outputting } \mathcal{E}(\lambda_1),\ \mathcal{E}(\lambda_2),\ \mathcal{E}(\lambda_3)$$

$$\text{END}$$